(19) Europäisches Patentamt
European Patent Office
Office européen des brevets

(11) Veröffentlichungsnummer: **0 001 616**
**B1**

(12) **EUROPÄISCHE PATENTSCHRIFT**

(45) Veröffentlichungstag der Patentschrift: **22.07.81**

(51) Int. Cl.³: **C 08 G 59/50,**
C 08 G 59/54, C 08 L 63/00
//C09J3/16

(21) Anmeldenummer: **78101127.5**

(22) Anmeldetag: **12.10.78**

(54) **Härtbare Epoxidharzgemische.**

(30) Priorität: **20.10.77 CH 12792/77**

(43) Veröffentlichungstag der Anmeldung:
**02.05.79 Patentblatt 79/9**

(45) Bekanntmachung des Hinweises auf die Patenterteilung:
**22.07.81 Patentblatt 81/29**

(84) Benannte Vertragsstaaten:
**CH DE FR GB NL SE**

(56) Entgegenhaltungen:
**DE - A - 1 720 414**
**DE - A - 1 768 646**
**DE - A - 2 164 099**
**GB - A - 960 622**
**GB - A - 1 019 925**

(73) Patentinhaber: **CIBA-GEIGY AG**
**Patentabteilung Postfach**
**CH-4002 Basel (CH)**

(72) Erfinder: **Zondler, Helmut, Dr.**
**Oberwilerstrasse 49**
**CH-4103 Bottmingen (CH)**
Erfinder: **Lehmann, Hans**
**Steinackerstrasse 11**
**CH-4147 Aesch (CH)**

**EP 0 001 616 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

Härtbare Epoxidharzgemische

Die vorliegende Erfindung betrifft härtbare Gemische aus Polyepoxidverbindungen, die als Härter ein Amin enthalten.

Epoxidharze finden eine breite Verwendung in verschiedenen technischen Bereichen wie z.B. zum Oberflächenschutz, in der Elektro- und Bauindustrie, als Klebemittel, Verbundwerkstoffe und Werkzeugharze. Neben verschiedenen üblichen Zusätzen enthalten die Epoxidharze Härter, deren Zusammensetzung z.B. auf die Verarbeitungsbedingungen, den Anwendungsbereich und die Produkteigenschaft abgestimmt werden müssen.

Es ist bekannt, N,N-Dialkyl-1,3-propylendiamine als Härter einzusetzen und zwar für sich alleine (DE—PS 961 029) oder zusammen mit "Polyamidharzen" (CH—PS 362 526). Obwohl sich diese 1,3-Propylendiamine als gute Härter erwiesen haben, ist ihre Verwendung nicht ohne Nachteile. Zum einen handelt es sich um relativ niedrig siedende Substanzen, die bei der Verarbeitung zur Herstellung von Epoxidharzen teilweise verdampfen und zu nicht unbedenklichen Geruchsbelästigungen führen. Diese können durch die Verwendung von Absaugvorrichtungen nur unvollständig behoben werden. Andererseits wird oft durch den Feuchtigkeits- und Kohlendioxidgehalt der Luft eine Carbonatabscheidung an Verarbeitungsmaschinen beobachtet.

N,N-Dialkyl-1,3-propylendiamine sind noch relativ reaktiv, so dass nach dem Vermischen der Komponenten frühzeitig der Viskositätsbereich erreicht wird, bei dem die Mischung nicht mehr verarbeitbar ist. Diese Viskosität wird im allgemeinen durch die Topfzeit angegeben, die in diesem Fall also noch als zu gering angesehen wird, was anwendungstechnische Nachteile bedeutet.

Es ist auch schon vorgeschlagen worden, N,N-Dimethyl-1,3-propylendiamin als Härter in solchen Polyepoxidzusammensetzungen zu verwenden, die als Klebemittel eingesetzt werden. Obwohl hiermit sehr gute Haftfestigkeiten erzielt werden, besteht das Bedürfnis, die Klebewirkung zu verbessern, um den Anwendungsbereich erweitern zu können.

Aufgabe vorliegender Erfindung ist es, härtbare Gemische aus Polyepoxidverbindungen mit einem Gehalt an aminischem Härter bereitzustellen, die längere Topfzeiten und auch eine gleiche oder verbesserte Klebewirkung beim Einsatz als Klebemittel aufweisen. Bevorzugt sollen die aminischen Härter schwerflüchtiger sein als z.B. N,N-Dialkyl-1,3-propylendiamine.

Gegenstand vorliegender Erfindung sind härtbare Gemische, enthaltend eine Polyepoxidverbindung mit durchschnittlich mehr als einer Epoxidgruppe um Molekül und einen Härter in einer Menge von 0,1 bis 30 Gewichtsteilen, bezogen auf 100 Teile Polyepoxidverbindung, der der Formel I entspricht,

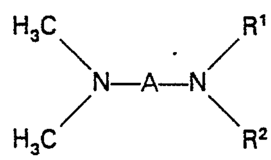

(I)

worin

A Aethylen, 1,3-Propylen oder in 1- oder 2-Stellung methyliertes 1,3-Propylen ist,

$R^1$ ein Wasserstoffatom und $R^2$ einen gesättigten, olefinisch ungesättigten oder arylierten Kohlenwasserstoffrest aliphatischen oder cycloaliphatischen Charakters sind, oder $R^2$ diesen Kohlenwasserstoffrest und $R^1$ Acyl bedeuten, oder

$R^1$ ein Wasserstoffatom oder unabhängig die Bedeutung von $R^2$ hat und $R^2$ $A^1$—CN oder $A^1$—$CH_2$—$NH_2$ bedeutet, worin $A^1$ Aethylen oder in 1-oder 2-Stellung methyliertes Aethylen ist, oder

$R^1$ und $R^2$ zusammen Alkyliden, Alkenyliden, Cycloalkyliden oder Cycloalkenyliden bedeutet.

$R^2$ in der Bedeutung von Alkyl und Alkenyl enthält bevorzugt 1 bis 12, besonders 1 bis 8, insbesondere 1 bis 4 C-Atome, in der Bedeutung von Cycloalkyl oder Cycloalkenyl 5 bis 8 Ringkohlenstoffatome und in der Bedeutung von Aralkyl bevorzugt 7 bis 12, besonders 7 bis 9 C-Atome. $R^1$ und $R^2$ können als Alkyliden oder Alkenyliden 2 bis 8 C-Atome, als Cycloalkyliden oder Cycloalkenyliden 5 bis 8 Ringkohlenstoffatome haben; $R^1$ als Acyl kann 1 bis 18, bevorzugt 1 bis 9, besonders 1 bis 4 C-Atome haben. A bedeutet bevorzugt 1,3-Propylen und $A^1$ bevorzugt Aethylen.

Eine bevorzugte Untergruppe an Härtern sind jene, in denen in formel I $R^1$ ein Wasserstoffatom und $R^2$ Aethyl, n-Propyl, i-Propyl, n-Butyl, i-Butyl, Cyclopentyl, Cyclohexyl, $\beta$-Cyanoäthyl oder $\gamma$-Aminopropyl sind.

Eine weitere bevorzugte Untergruppe an Härtern sind jene, in denen in Formel I $R^1$ und $R^2$ entweder $\beta$-Cyanoäthyl oder $\gamma$-Aminopropyl sind oder jene, in denen $R^1$ und $R^2$ zusammen i-Butyliden, Benzyliden oder Cyclohexyliden bedeuten.

Eine besonders wertvolle Gruppe ist jene, in der in Formel I A Aethylen und besonders 1,3-Propylen bedeutet, $R^1$ ein Wasserstoffatom ist und $R^2$ für $\beta$-Cyanoäthyl, Aminopropyl oder Acyl mit 1 bis 7 C-Atomen steht.

$R^2$ in Formel I kann Alkyl oder Alkenyl, Cycloalkenyl, Cycloalkyl sein. Beispiele hierfür sind: Methyl, Aethyl, Propyl, i-Propyl, n-, i- und t-Butyl, Pentyl, Hexyl, Heptyl, Octyl, Nonyl, Decyl, Undecyl, Dodecyl, Cyclopentyl, Cyclohexyl, Cycloheptyl, Cyclooctyl, Aethenyl, Propenyl, Butenyl, Hexenyl und Cyclohexenyl. $R^1$ und $R^2$ in seiner Bedeutung als Aralkyl ist besonders Benzyl. Weitere Beispiele sind $\alpha$- oder $\beta$-Phenyläthyl und Phenylpropyl. Besonders bevorzugt sind die niederen Alkylreste bis Butyl, Cyclohexyl und Benzyl.

$R^1$ und $R^2$ zusammen können Alkyliden, Cycloalkyliden, Alkenyliden und Cycloalkenyliden bedeuten. Beispiele hierfür sind: Aethyliden, n- oder i-Propyliden, n- oder i-Butyliden, Pentyliden, Hexyliden, Heptyliden, Octyliden, Cyclopentyliden, Cyclohexyliden, Cyclooctyliden, Benzyliden, Diphenylmethyliden und Propenyliden, Butenyliden, Hexenyliden und Cyclohexenyliden. Besonders bevorzugt sind i-Butyliden, Cyclohexyliden und Benzyliden.

$R^2$ in seiner Bedeutung als Acyl kann z.B. sein: Formyl, Acetyl, Propionyl, n- oder i-Butyroyl, n- oder i-Valeroyl, Caproyl, Benzoyl, Phenylacetyl und $\alpha$- oder $\beta$-Phenylpropionyl. Besonders bevorzugt sind jene Niederacylreste, die bis 4 C-Atome aufweisen und Benzoyl. Die Acylreste können auch durch OH— oder $NH_2$ Gruppen substituiert sein. Beispiele sind Hydroxy- oder Aminovaleroyl, Hydroxy- oder Aminocaproyl, Hydroxybenzoyl.

Jene Verbindungen der Formel I, in der A in 1-oder 2-Stellung methyliertes 1,3-Propylen bedeutet, sind neu. Diese Verbindungen zeichnen sich bei der erfindungsgemässen Verwendung durch besonders lange Topfzeiten aus. Gleichwohl ist eine gleichmässige Durchhärtung der Gemische bei höheren Temperaturen, z.B. über 100°C, möglich.

Einige Beispiele für Härter der Formel I sind:
N,N-Dimethyl-N'-($\beta$-cyanoäthyl)-äthylendiamin,
N,N-Dimethyl-N'-($\gamma$-aminopropyl)-äthylendiamin,
N,N-Dimethyl-N'-i-butyläthylendiamin,
N,N-Dimethyl-N'-cyclohexyläthylendiamin,
N,N-Dimethyl-N'-butyliden-äthylendiamin,
N,N-Dimethyl-N'-cyclohexyliden-äthylendiamin,
N,N-Dimethyl-N',N'-dibutyl-äthylendiamin,
N,N-Dimethyl-N',N'-di($\beta$-cyanoäthyl)-äthylendiamin,
N,N-Dimethyl-N',N'-di($\gamma$-aminopropyl)-äthylendiamin,
N,N-Dimethyl-N'-($\beta$-cyanoäthyl)-1,3-diaminobutan,
N,N-Dimethyl-N'-($\gamma$-aminopropyl)-1,3-diaminobutan,
N,N-Dimethyl-N'-($\gamma$-aminobutyl)-1,3-diaminopropan,
N,N-Dimethyl-N'-($\beta$-cyanopropyl)-1,3-diaminopropan,
N,N-Dimethyl-N'-($\beta$-cyanopropyl)-äthylendiamin,
N,N-Dimethyl-N'-($\gamma$-aminobutyl)-äthylendiamin,
N,N-Dimethyl-N'-isobutyliden-1,3-diaminopropan,
N,N-Dimethyl-N'-benzyliden-1,3-diaminopropan,
N,N-Dimethyl-N'-cyclohexyliden-1,3-diaminopropan,
N,N-Dimethyl-N'-isobutyl-1,3-diaminopropan,
N,N-Dimethyl-N'-benzyl-1,3-diaminopropan,
N,N-Dimethyl-N'-cyclohexyl-1,3-diaminopropan,
N,N-Dimethyl-N',N'-di-($\beta$-cyanoäthyl)-1,3-diaminopropan,
N,N-Dimethyl-N',N'-di-($\gamma$-aminopropyl)-1,3-diaminopropan,
N,N-Dimethyl-N',N'-diäthyl-1,3-diaminopropan,
N,N-Dimethyl-N'-($\gamma$-aminopropyl)-1,3-diaminopropan,
N,N-Dimethyl-N'-($\beta$-cyanoäthyl)-1,3-diaminopropan,
N,N-Dimethyl-N'-butyliden-1-methyl-1,3-diaminopropan,
N,N-Dimethyl-N'-($\beta$-cyanopropyl)-2-methyl-1,3-diaminopropan,
N,N-Dimethyl-N'-propionyl-N'-methyl-1-3-diaminopropan.

Besonders bevorzugt sind N,N-Dimethyl-N'-($\gamma$-aminopropyl)-1,3-diaminopropan und N,N-Dimethyl-N'-($\beta$-cyanoäthyl)1,3-diaminopropan.

Die Härter der Formel I sind teilweise bekannte Verbindungen oder können nach bekannten Verfahren hergestellt werden. Zur Herstellung der Härter, die Nitrilgruppen enthalten, geht man zweckmässig von den bekannten Aminen der Formel II

$$(CH_3)_2N—A—NH_2 \qquad (II)$$

aus und setzt diese in bekannter Weise mit Acrylnitril, Methacrylnitril oder Crotonitril um (vgl. US—PS 2 937 106). Man kann aber auch entsprechende halogenierte Nitrile als Reaktanden einsetzen, z.B. $\beta$-Chlorpropionitril oder $\beta$-Brombuttersäurenitril. Die Reaktionen können mit oder ohne inertem Lösungsmittel und bei Temperaturen von etwa 0 bis 200°C durchgeführt werden. Bei der Anlagerung der ungesättigten Nitrile verwendet man vorteilhaft in manchen Fällen saure Katalysatoren oder Radikalbildner. Je nach dem molaren Verhältnis der Reaktanden, das für Amin zu Nitril etwa 1:1 oder 1:2 betragen kann, wird das Mono- bzw. Bisadditionsprodukt erhalten.

Aus den Nitrilen der Formel I erhält man durch die bekannte katalytische Hydrierung (vgl. US—PS 2 937 106) die entsprechenden Amine.

Die Azomethine der Formel I erhält man, wenn man die Amine der Formel II mit Aldehyden oder Ketonen umsetzt und unter Wasserbildung die Alkyliden bzw. Cycloalkylidengruppe einführt.

Die Härter der Formel I, in denen $R^2$ Alkyl, Cycloalkyl oder Aralkyl bedeuten, können entweder durch katalytische Reduktion der Azomethine der Formel I mit z.B. Raney-Nickel hergestellt werden oder durch die Umsetzung der Amine der Formel II mit Halogenalkanen, -cycloalkanen oder Aralkylhalogenide, z.B. den Chloriden.

Die Acylderivate der Formel I, in denen $R^1$ Acyl bedeutet, werden in bekannter Weise durch Acylierung der entsprechenden Amine der Formel I erhalten. Zur Acylierung verwendet man zweckmässig amidbildende Carbonsäurederivate, z.B. Niederalkylcarbonsäureester oder Carbonsäurehalogenide oder cyclische Ester oder Amide wie $\varepsilon$-Caprolacton oder $\varepsilon$-Caprolactam.

Die Härter der Formel I werden den härtbaren Gemischen bevorzugt in Mengen von 0,5 bis 20 und insbesondere 1 bis 15 Gewichtsteilen zugegeben, bezogen auf 100 Gewichtsteile Polyepoxidverbindung. Sie können für sich allein oder zusammen mit anderen Härtern eingesetzt werden, wobei sie dann oft als Härtungsbeschleuniger wirken. Bekannte Härter sind z.B. Säuren wie Di- und Polycarbonsäuren, Carbonsäureanhydride, mehrwertige Alkohole und Phenole, Polyamide, Melamin-Formaldehyd- sowie Harnstoff-Formaldehyde-Kondensate, Polyamine, Polyisocyanate, Phenoplast- und Aminoplastvorkondensate. Andere geeignete Härtungsmittel sind z.B. Polyaminoamide, die aus di- oder trimerisierten Fettsäuren und aliphatischen Polyaminen hergestellt werden (vgl. CH—PS 362 526). Bei der Verwendung als Härtungsbeschleuniger bzw. zusammen mit anderen Härtern genügt im allgemeinen eine Menge von 0,1 bis 5 Gewichtsteilen, bezogen auf 100 Teile Polyepoxidverbindung.

Die Härter können auch in Form von Addukten eingesetzt werden, z.B. mit flüssigem Butadien-Nitril-Copolymer, das endständige Carboxylgruppen aufweist.

Als Polyepoxidverbindungen kommen für die erfindungsgemässen härtbaren Gemische vor allem solche mit durchschnittlich mehr als einer an ein Heteroatom (z.B. Schwefel, vorzugsweise Sauerstoff oder Stickstoff) gebundenen Glycidylgruppe, $\beta$-Methylglycidylgruppe oder 2,3-Epoxycyclopentylgruppe in Frage; genannt seien insbesondere Bis-(2,3-epoxycyclopentyl)äther; Di- bzw. Polyglycidyläther von mehrwertigen aliphatischen Alkoholen, wie 1,4-Butandiol, oder Polyalkylenglykolen, wie Polypropylenglykole; Di- oder Polyglycidyläther von cycloaliphatischen Polyolen, wie 2,2-Bis-(4-hydroxycyclohexyl)-propan; Di- bzw. Polyglycidyläther von mehrwertigen Phenolen, wie Resorcin, Bis-(p-hydroxyphenyl)-methan, 2,2-Bis-(p-hydroxyphenyl)-propyl (=Diomethan), 2,2-Bis-(4'-hydroxy-3',5'-dibromphenyl)propan, 1,1,2,2-Tetrakis-(p-hydroxylphenyl)-äthan, oder von unter sauren Bedingungen erhaltenen Kondensationsprodukten von Phenolen mit Formaldehyd wie Phenol-Novolake und Kresol-Novolake; Di- bzw. Poly-($\beta$-methylglycidyl)-äther der oben angeführten mehrwertigen Alkohole oder mehrwertigen Phenole; Polyglycidylester von mehrwertigen Carbonsäuren, wie Phthalsäure, Terephthalsäure, $\Delta^4$-Tetrahydrophthalsäure und Hexahydrophthalsäure; N-Glycidylderivate von Aminen, Amiden und heterocyclischen Stickstoffbasen, wie N,N-Diglycidylanilin, N,N-Diglycidyltoluidin, N,N,N',N'-Tetraglycidyl-bis-(p-aminophenyl)-methan; Triglycidyl-isocyanurat; N,N'-Diglycidyläthylenharnstoff; N,N'-Diglycidyl-5,5-dimethylhydantoin, N,N'-Diglycidyl-5-isopropyl-hydantoin; N,N'-Diglycidyl-5,5-dimethyl-6-isopropyl-5,6-dihydro-uracil.

Gewünschtenfalls kann man den Polyepoxiden zur Herabsetzung der Viskosität aktive Verdünner, wie z.B. Styroloxid, Butylglycidyläther, Isooctylglycidyläther, Phenylglycidyläther, Kresylglycidyläther, Glycidylester von synthetischen, hochverzweigten, in der Hauptsache tertiären aliphatischen Monocarbonsäuren ("CARDURA E") zusetzen.

Die Härtung der erfindungsgemässen härtbaren Mischungen zu Formkörpern und dergleichen erfolgt zweckmässig im Temperaturintervall von 20 bis 160°C. Man kann die Härtung in bekannter Weise auch zwei- ode mehrstufig durchführen, wobei die erste Härtungsstufe bei niedrigerer Temperatur und die Nachhärtung bei höherer Temperatur durchgeführt wird.

In manchen Fällen kann es gewünscht werden, die Gelier- bzw. -Härtungszeiten der erfindungsgemässen Gemische zu verkürzen. Hierzu können bekannte Beschleuniger für die Amin-Härtung, z.B. Mono- oder Polyphenole, wie Phenol oder Diomethan, Salicylsäure oder Salze der Rhodanwasserstoffsäure, wie $NH_4SCN$, zugesetzt werden.

Die erfindungsgemässen härtbaren Mischungen aus Polyepoxidverbindungen und einem Härter der Formel I können ferner vor der endgültigen Härtung in irgendeiner Phase mit üblichen Modifizierungsmitteln, wie Streck-, Füll- und Verstärkungsmitteln, Pigmenten, Farbstoffen, organischen Lösungsmitteln, Weichmachern, Verlaufmitteln, Thixotropiermitteln, flammhemmenden Stoffen, Formtrennmitteln versetzt werden.

Als Streckmittel, Verstärkungsmittel, Füllmittel und Pigmente, die in den erfindungsgemässen härtbaren Mischungen eingesetzt werden können, seien z.B. genannt: Steinkohlenteer, Bitumen, flüssige Cumaron-Inden-Harze, Textilfasern, Glasfasern, Asbestfasern, Borfasern, Kohlenstofffasern, Cellulose, Polyäthylenpulver, Polypropylenpulver; Quarzmehl; mineralische Silikate, wie Glimmer, Asbestmehl, Schiefermehl; Kaolin, Aluminiumoxidtrihydrat, Kreidemehl, Gips, Antimontrioxid, Bentone, Kieselsäureaerogel ("AEROSIL"), Lithopone, Schwerspat, Titandioxid, Russ, Graphit, Oxidfarben, wie Eisenoxid, oder Metallpulver, wie Aluminiumpulver oder Eisenpulver.

Als organische Lösungsmittel eignen sich für die Modifizierung der härtbaren Mischungen z.B. Toluol, Xylol, n-Propanol, Butylacetat, Aceton, Methyläthylketon, Diacetonalalkohol, Aethylenglykolmonomethyläther, -monoäthyläther und -monobutyläther.

Als Weichmacher können für die Modifizierung der härtbaren Mischungen z.B. Dibutyl-, Dioctyl- und Dinonylphthalat, Trikresylphosphat, Trixylenylphosphat, Diphenoxyäthylformal und Polypropylenglykole eingesetzt werden.

Als Verlaufmittel ("flow control agents") beim Einsatz der härtbaren Mischungen speziell im Oberflächenschutz, kann man z.B. Silicone, flüssige Acrylharze, Celluloseacetobutyrat, Polyvinylbutyral, Wachse, Stearate etc. (welche z.T. auch als Formtrennmittel Anwendung finden) zusetzen.

Speziell für die Anwendung auf dem Lackgebiet können ferner die Polyepoxidverbindungen in bekannter Weise mit Carbonsäuren, wie insbesondere höheren ungesättigten Fettsäuren, partiell verestert sein. Es ist ferner möglich, solchen Lackharzformulierungen andere härtbare Kunstharze, z.B. Phenoplaste oder Aminoplaste, zuzusetzen.

Die Herstellung der erfindungsgemässen härtbaren Mischungen kann in üblicher Weise mit Hilfe bekannter Mischaggregate (Rührer, Kneter, Walzen) erfolgen.

Die erfindungsgemässen härtbaren Epoxidharzmischungen finden ihren Einsatz vor allem auf den Gebieten des Oberflächenschutzes, der Elektrotechnik, der Laminierverfahren, der Klebstofftechnik und im Bauwesen. Sie können in jeweils dem speziellen Anwendungszweck angepasster Formulierung, im ungefüllten oder gefüllten Zustand, gegebenenfalls in Form von Lösungen oder Emulsionen, als Anstrichmittel, Lacke, Pressmassen, Spritzgussformulierungen, Tauchharze, Giessharze, Imprägnierharze, Bindemittel, als Werkzeugharze, Laminierharze, Dichtungs- und Spachtelmassen, Bodenbelagsmassen und Bindemittel für mineralische Aggregate verwendet werden.

Bevorzugt werden die erfindungsgemässen Gemische als Laminierharze und insbesondere als Klebharze eingesetzt.

Bei den erfindungsgemäss verwendeten Härten handelt es sich um flüssige bis viskose Substanzen, die schwerflüchtig sind und auch bei Verarbeitung der erfindungsgemässen Gemische nur wenig verdampfen, so dass hierbei kaum Geruchsbelästigungen auftreten. Die erfindungsgemässen härtbaren Gemische weisen überraschend Längere Topfzeiten (also verbesserte Verarbeitungsmöglichkeiten) auf als jene Gemische, die N,N-Dimethyl-1,3-propylendiamin enthalten, wobei mindestens gleich gute und zum Teil bessere Haftfähigkeiten beim Einsatz als Klebharze erzielt werden.

Die nachfolgenden Beispiele dienen zur näheren Erläuterung der Erfindung:

*A) Herstellungsbeispiele*

Beispiel 1

N,N-Dimethyl-N'-benzyliden-diaminoäthan.

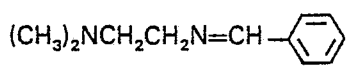

61,6 g 2-Dimethylamino-äthylamin werden mit 74,2 g Benzaldehyd in 150 ml Benzol am Wasserabscheider gekocht, wobei sich innerhalb 6 Stunden 12,3 ml $H_2O$ abscheiden. Man entfernt Benzol am Rotationsverdampfer und destilliert den Rückstand.

Ausbeute (109,2 g (88,5% d.Th) gaschromatographische einheitliches Produkt vom Sdp. 130—132°C/2000 pa 15 Torr). Das NMR-Spektrum ist in Einklang mit der Struktur.

Beispiele 2—6

Ausgehend von 3-Dimethylamino-1-propylamin und den entsprechenden Aldehyden oder Ketonen erhält man bei analoger Arbeitsweise wie in Beispiel 1 beschrieben die folgenden Imine:

| Beispiel | Imin | Ausbeute | Sdp. |
|---|---|---|---|
| 2 | 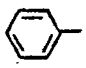 $-CH=N(CH_2)_3N(CH_3)_2$ | 96% | – |
| 3 | $(CH_3)_2CHCH=N(CH_2)_3N(CH_3)_2$ | 81% | 64°C /1067 Pa (8 Torr) |
| 4 | $[CH_3(CH_2)_4]_2C=N(CH_2)_3N(CH_3)_2$ | 92% | 148°C /1067 Pa (8 Torr) |
| 5 | 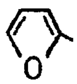 $CH=N(CH_2)_3N(CH_3)_2$ | 96% | 121°C /1733 Pa (13 Torr) |
| 6 | 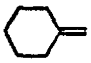 $=N(CH_2)_3N(CH_3)_2$ | 93% | 116°C /1467 Pa (11 Torr) |

Beispiel 7

N-(γ-Dimethylaminopropyl)-2-methyl-penten-(2)-aldimin

$$CH_3CH_2CH{=}\overset{\displaystyle CH_3}{\overset{|}{C}}{-}CH{=}N(CH_2)_3N(CH_3)_2$$

41,0 g 3-Dimethylamino-1-propylamin (0,40 Mol) und 46,5 g Propionaldehyd (0,80 Mol) werden in 200 ml Toluol am Wasserabscheider gekocht; es scheiden sich innerhalb 11 Stunden 14,3 ml $H_2O$ ab. Man engt ein und destilliert den Rückstand. Ausbeute 51,9 g (71% d.Th.); Sdp. 113°C/2000 Pa (15 Torr).

Beispiel 8

N,N-Dimethyl-N'-isobutyl-1,3-diaminopropan

$$(CH_3)_2N(CH_2)_3NHCH_2CH(CH_3)_2$$

Durch Umsetzung von 92 g 3-Dimethylamino-1-propylamin mit 65 g Isobutyraldehyd in 200 ml Benzol stellt man durch azeotrope Abscheidung des Rekationswassers eine Lösung von N,N-Dimethyl-N'-isobutyliden-1,3-diaminopropan in Benzol her. Diese Lösung wird im Autoklav bei 90°C und $12{,}26.10^6$ Pa (125 atü) in Gegenwart von 14 g Raney-Nickel hydriert. Die destillative Aufarbeitung ergibt 95,6 g Reinprodukt vom Sdp. 75°C/18,66 Pa (14 Torr).

Beispiele 9—12

Durch katalytische Hydrierung der durch Destillation gereinigten Imine gemäss den Beispielen 2, 5, 6 und 7 unter Verwendung von Raney-Nickel erhält man bei analoger Arbeitsweise wie in Beispiel 8 beschrieben die folgenden Amine:

| Beispiel | Amin | Ausbeute | Sdp. |
|---|---|---|---|
| 9 | 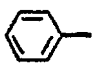 $CH_2NH(CH_2)_3N(CH_3)_2$ | 96% | 144°C/2133 Pa (16 Torr) |
| 10 | 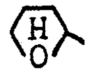 $CH_2NH(CH_2)_3N(CH_3)_2$ | 88% | 117°C/1200 Pa (9 Torr) |
| 11 | 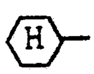 $NH(CH_2)_3N(CH_3)_2$ | 93% | 116°C/1733 Pa (13 Torr) |
| 12 | $CH_3CH_2CH_2CHCH_2NH(CH_2)_3N(CH_3)_2$<br>\|<br>$CH_3$ | 88%* | 95°C/1067 Pa (8 Torr) |

*) Katalysator 5% Platin auf Kohle; Lösungsmittel Cyclohexan.

Beispiel 13
N-(γ-Dimethylaminopropyl)-3-aminopropionitril

$(CH_3)_2N(CH_2)_3NHCH_2CH_2CN$

Man löst 1,6 g Hydrochinon in 1533 g 3-Dimethylamino-1-propylamin und tropft unter Rühren und Kühlen innerhalb 1 1/2 Stunden 836 g Acrylnitril (5% Ueberschuss) bei einer Temperatur von 22—25°C zu. Danach wird bei 22—25°C noch 15 Stunden gerührt und das Gemisch über eine Füllkörperkolonne destilliert. Ausbeute 2102 g (90,3% d. Th.); Sdp. 122°C/1333 Pa (10 Torr).

Beispiel 14
N-(β-Dimethylaminoäthyl)-3-aminopropionitril

$(CH_3)_2NCH_2CH_2NHCH_2CH_2CN$

Man arbeitet wie in Beispiel 13 beschrieben unter Einsatz von Dimethylaminoäthylamin und Acrylnitril. Ausbeute 83% d.Th., Sdp. 122°C/22,66 Pa (17 Torr).

Beispiel 15
N-(γ-Dimethylaminopropyl)-3-aminobutyronitril

$CH_3$
|
$(CH_3)_2N(CH_2)_3NHCHCH_2CN$

Ein Gemisch aus 673,5 g 3-Dimethylamino-1-propylamin, 368,4 g Crotonsäurenitril und 20 g Eisessig wird innerhalb 20 Minuten zum Rückfluss erhitzt, wobei sich eine Temperatur von 123°C einstellt. Man hält 7 Stunden auf dieser Temperatur; die Reaktion verläuft nicht merklich exotherm. Nach dem Erkalten wird die Essigsäure durch Zugabe von 70 ml wässriger 20%iger Natronlauge neutralisiert, das Gemisch mit 2000 ml Chloroform geschüttelt, sodann die organische Phase abgetrennt und zweimal mit je 50 ml $H_2O$ gewaschen. Nach dem Entfernen des Chloroforms am Rotationsverdampfer wird der Rückstand im Vakuum destilliert. Ausbeute 93,0%, Sdp. 115°C/10,67 Pa (8 Torr). Durch Titration mit 0,1 n HCl ergibt sich das Molekulargewicht zu 173 (Theorie 169); das produkt ist gaschromatographisch einheitlich.

Beispiel 16

N-($\gamma$-Dimethylaminopropyl)-3-aminoisobutyronitril

$$(CH_3)_2N(CH_2)_3NHCH_2\underset{}{C}H(CH_3)CN$$

Zu 404 g 3-Dimethylamino-1-propylamin und 0,8 g Hydrochinon lässt man 16 ml konz. HCl zutropfen und heizt danach auf 90°C auf. Dann fügt man innerhalb 15 Minuten 279 g Methacrylnitril zu; die Reaktion ist nich exotherm. Nach 10-stündigem Kochen am Rückfluss steigt die Temperatur von 99°C auf 125°C. Das erkaltete Gemisch wird in 500 ml Chloroform gelöst und mit 2 Portionen $H_2O$ zu je 100 ml extrahiert. Nach dem Einengen erhält man 590, 6 g Rohprodukt, dessen Destillation 552 g (82,6% d.Th.) reines Amin vom Sdp. 135°C/2266 Pa (17 Torr) ergibt. Das NMR-Spektrum ist in Uebereinstimmung mit der Struktur.

Beispiel 17

N-($\beta$-Dimethylaminoäthyl)-3-aminoisobutyronitril

$$(CH_3)_2NCH_2CH_2NHCH_2CH(CH_3)CN$$

Man arbeitet wie in Beispiel 16 beschrieben ausgehend von 2-Dimethylaminoäthylamin und Methacrylnitril. Ausbeute 75,2% d.Th. an gaschromatographisch einheitlichem Produkt; Sdp. 123°C/2266 Pa (17 Torr).

Beispiel 18

N-($\gamma$-Dimethylaminopropyl)-1,3-diaminopropan

$$(CH_3)_2N(CH_2)_3NH(CH_2)_3NH_2$$

216 g N,N-Dimethyl-N'-($\beta$-cyanoäthyl)-1,3-diaminopropan werden in 216 ml Isopropanol in Gegenwart von 140 g gasförmigem Ammoniak und 13 g Raney-Nickel im Autoklav bei 120°C und einem Anfangsdruck von $7,85.10^6$ Pa (80 atü) bis zur Druckkonstanz, die bereits nach 30 Minuten erreicht wird, hydriert. Man saugt den Katalysator ab, engt am Rotationsverdampfer ein und destilliert über eine Füllkörperkolonne. Ausbeute 205,7 g (92,8%) Sdp. 121°C/1467 Pa (11 Torr).

Beispiele 19—21

Durch katalytische Hydrierung in Gegenwart von Raney-Nickel unter den im Beispiel 18 angegebenen Bedingungen erhält man ausgehend von den entsprechenden Nitrilen gemäss den Beispielen 14, 16 und 17 die folgenden Amine:

| Beispiel | Amin | Ausbeute | Sdp. |
|---|---|---|---|
| 19 | $(CH_3)_2N(CH_2)_2NH(CH_2)_3NH_2$ | 88% | 102°C/2266 Pa (17 Torr) |
| 20 | 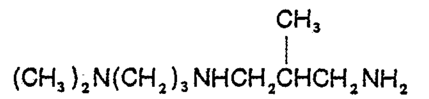 | 94% | 123°C/2266 Pa (17 Torr) |
| 21 | 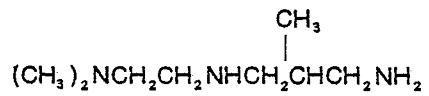 | 93% | 108°C/2266 Pa (17 Torr) |

Die Amine zeigen im IR-Spektrum Banden bei 3370 und 3300 $cm^{-1}$ ($NH_2$ und NH Streckschwingungen; 3300 stärker, da Ueberlagerung); 1600 $cm^{-1}$ breite $NH_2$-Deformationsschwingung. Bei der Titration mit 0, 1n HCl werden die Amine dreifach protoniert; die durch Titration erhaltenen Molekulargewichte stimmen gut mit den berechneten Werten überein.

Beispiel 22

N-(β-Cyanoäthyl)-N-(γ-dimethylaminopropyl)-3-aminopropionitril

$$(CH_3)_2N(CH_2)_3N(CH_2CH_2CN)_2$$

102 g 3-Dimethylamino-1-propylamin werden unter Rühren mit 5 ml konz. Salzsäure versetzt. Danach wird auf 80°C erhitzt, und man tropft innerhalb 30 Minuten unter Kühlung 127 g Acrylnitril bei dieser Temperatur zu. Anschliessend wird 16 Stunden auf 103°C erhitzt und nach dem Erkalten mit einer Lösung von 3 g NaOH in 100 ml $H_2O$ versetzt. Man extrahiert mit Chloroform, wäscht die organische Phase mit $H_2O$, engt am Rotationsverdampfer ein und destilliert den Rückstand. Ausbeute 192 g (92% d.Th.) an gaschromatographisch einheitlichem Produkt.

Beispiel 23

N-(β-Cyanoäthyl)-N-(γ-dimethylaminopropyl)-3-aminobutyronitril

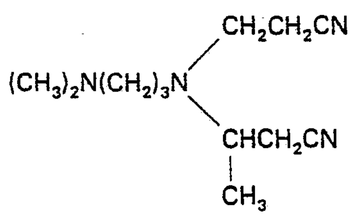

254 g N-(γ-Dimethylaminopropyl)-3-aminobutyronitril, hergestellt in Beispiel 15, werden mit 50 ml konz. HCl versetzt; die Temperatur steigt dabei auf 80°C. Bei dieser Temperatur lässt man dann 95 g Acrylnitril zutropfen und erhitzt noch 7 Stunden auf 80—84°C. Nach dem Erkalten wird die Salzsäure mit 130 ml 20%iger NaOH-Lösung neutralisiert und das Gemisch mit Chloroform extrahiert. Nach dem Waschen der organischen Phase, dem Einengen und Destillieren des Rückstands erhält man 250 g (75% d.Th.) gaschromatographisch einheitliches Produkt vom Sdp. 138—140°C/18,7 Pa (0,14 Torr). Bei der Titration mit 0,1 n HCl erfolgt nur Monoprotonierung, und das Molekulargewicht ergibt sich zu 222 (Theorie 222).

Beispiel 24

N-(β-Cyanoäthyl)-N-(γ-dimethylaminopropyl)-3-aminoisobutyronitril

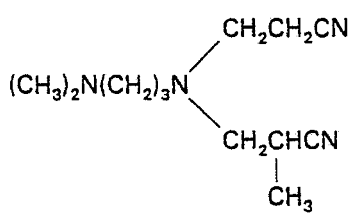

104 g N-(γ-Dimethylaminopropyl)-3-aminoisobutyronitril, hergestellt nach Beispiel 16, werden

mit 43 g Acrylnitril in Gegenwart von 30 ml konz. HCl wie in Beispiel 23 bei 92—99°C 4 Stunden erhitzt. Nach dem Neutralisieren und Extrahieren mit Chloroform wird destilliert. Ausbeute 117 g (85% d.Th.), Sdp. 127°C/17,3 Pa (0,13 Torr). Titration mit 0,1n HCl: Monoprotonierung und Molekulargewicht 223 (Theorie 222).

Beispiel 25
N-($\gamma$-Aminopropyl)-N-($\gamma$-dimethylaminopropyl)-1,3-diaminopropan

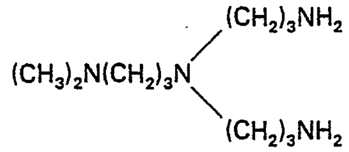

249 g N-($\beta$-Cyanoäthyl)-N-($\gamma$-dimethylaminopropyl)-3-aminopropionitril, hergestellt nach Beispiel 22, werden in 500 ml Aethanol und 150 g gasförmigem Ammoniak im Autoklav in Gegenwart von 25 g Raney-Nickel bei 110°C und 13,73.$10^6$ Pa (140 atü) Anfangsdruck hydriert. Bereits nach 30 Minuten bleibt der Druck konstant. Man entfernt den Katalysator und das Lösungsmittel und destilliert das Rohamin. Man erhält 169 g Reinamin von Sdp. 100°C/ 21,3 Pa (0,16 Torr). Nochmalige Destillation des Vorlaufs ergibt weitere 32,2 g Substanz und die Gesamtausbeute beträgt 78%.

Beispiel 26
$N_3$-($\gamma$-Aminopropyl)-$N_3$-($\gamma$-dimethylaminopropyl)-1,3-diaminobutan

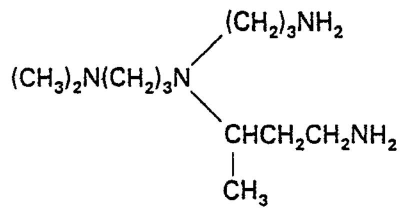

151 g N-($\beta$-Cyanoäthyl)-N-($\gamma$-dimethylaminopropyl)-3-aminobutyronitril, hergestellt nach Beispiel 23, werden in 450 ml Isopropanol in Gegenwart von 150 g $NH_3$ und 12 g Raney-Nickel bei 100°C und 13,73,$10^6$ Pa (140 atü) Anfangsdruck bis zur Druckkonstanz 3 Stunden hydriert. Die Destillation de Gemischs nach der Abtrennung des Katalysators ergibt 107,6 g (68,7% d.Th.) Amin vom Sdp. 100°C/38,7 Pa (0,23 Torr). Titration mit 0,1n HCl: oberhalb pH 3 dreifache Protonierung; Molekulargewicht 232 (Theorie 230).

Beispiel 27
$N_3$-($\gamma$-Aminopropyl)-$N_3$-($\gamma$-dimethylaminopropyl)-2-methyl-1,3-diaminopropan

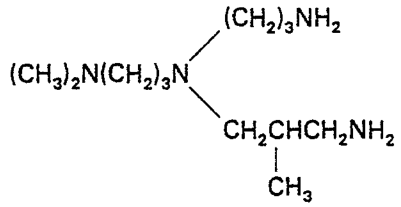

113 g N-($\beta$-Cyanoäthyl)-N-($\gamma$-dimethylaminopropyl)-3-aminoisobutyronitril, hergestellt nach Beispiel 24, werden in 350 ml Isopropanol und 120 g $NH_3$ in Gegenwart von 9 g Raney-Nickel im Autoklav bei 100°C und 13,73.$10^6$ Pa (140 atü) Anfangsdruck 4 Stunden hydriert. Die destillative Aufarbeitung ergibt 94,6 g (80,5% d.Th.) Reinprodukt vo, Sdp. 96°C/22,7 Pa (0,17 Torr). Titration mit 0,1n HCl: oberhalb pH 3 dreifache Protonierung; Molekulargewicht 234 (berechnet 230).

Beispiele 28—31
Durch Acylierung der in den Beispielen 11, 12, 13 und 15 beschriebenen sekundären Amine mit Methylformiat oder Propionsäureanhydrid wurden folgende Verbindungen hergestellt:

| Beispiel | Verbindung | R | Ausbeute | Sdp. |
|---|---|---|---|---|
| 28 | 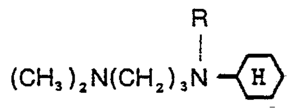 | $-COC_2H_5$ | 96% | 103 °C /16 Pa (0,12 Torr) |
| 29 | 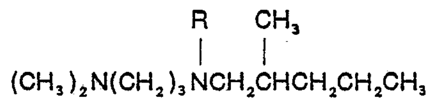 | $-CHO$ | 91% | 147 °C /1200 Pa (9 Torr) |
| 30 | 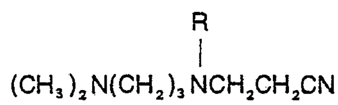 | $-CHO$ | 72% | 116 °C /123 Pa (0,13 Torr) |
| 31 | 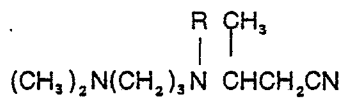 | $-COC_2H_5$ | 89% | 110 °C /21,3 Pa (0,16 Torr) |

Beispiele 32 und 33

Acylierung der Imine gemäss den Beispielen 3 und 6 mit Acetanhydrid bzw. Propionsäureanhydrid ergibt die folgenden N,N-Dimethyl-N'-alkenyl-N'-acyl-1,3-propylendiamine:

| Beispiel | Verbindung | R | Ausbeute | Sdp. |
|---|---|---|---|---|
| 32 | 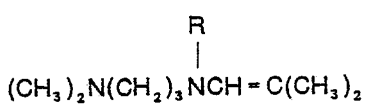 | $-COCH_3$ | 65% | 68 °C /16 Pa (0,12 Torr) |
| 33 | 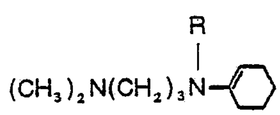 | $-COC_2H_5$ | 85% | 97 °C /16 Pa (0,12 Torr) |

*B) Anwendungsbeispiele*

Die erwähnten mechanischen Eigenschaften werden auf folgende Weise bestimmt:

Die Zugscherfestigkeit wird an geschliffenen und entfetteten Antikorrodal 100-B Proben mit 12 mm Ueberlappung gemäss DIN 53 283 bestimmt.

Die Rollenschälfestigkeit wird an geätzten Aluminium-proben gemäss ISO 4578 bestimmt.

Die Kurzzeitwärmefestigkeit wird an Zugscherproben aus Aluminium (Antikorrodal 100 B) mit 12 mm Ueberlappung wie folgt gemessen:

Die Proben werden in einem Ofen eingespannt und mit einer konstanten Last von 4 $N/mm^2$ versehen. Anschliessend wird die Temperatur mit 12 °C/Stunde so lange erhöht, bis die Klebefuge bricht. Die so ermittelten Brucktemperaturen sind in der Tabelle 1 zusammengestellt.

Die Topfzeit wird bei 23 °C an 100 g — oder 200 g — Proben im Tecam-Gerät ermittelt. Teile Bedeuten stets Gewichtsteile.

*1) Untersuchungen an Amin/Epoxyd-Gemischen ohne weitere Zusätze.*

Für die Bestimmung der Topfzeiten und der Zugscherfestigkeiten der ausgehärteten Proben wurden die in der Tabelle 1 angegebenen Mischungen aus 10—20 Teilen Amin und 100 Teilen eines flüssigem Epoxidharzes auf Basis von Bisphenol A und Epichlorhydrin (Epoxydäquivalent 188) eingesetzt.

TABELLE 1

| Anwendungs-beispiel Nr. | Diaminderivat als Härter | Dampfdruck Diaminderivat (Pa / 100 °C) | Gew.-Teile Diaminderivat auf 100 Gew.-Teile Epoxidharz | Tecam-Topfzeit (100 g / 23 °C) | | Zugscherfestigkeit ($N/mm^2$) nach einer Härtungszeit von | |
|---|---|---|---|---|---|---|---|
| | | | | Std. | Min. | 2 Tagen (23 °C) | 20 Min (100 °C) |
| Vergleich | I | $33.3 \cdot 10^3$ | 10 | – | 60 | 2,1 | 14,0 |
| 1 | II | 400 | 10 | 5 | 26 | 6,2 | 10,0 |
| 2 | III | 5333 | 10 | 5 | 58 | 4,8 | 14,0 |
| 3 | IV | 667 | 10 | 4 | 13 | 4,3 | 19,0 |
| 4 | V | 800 | 10 | 4 | 44 | 7,6 | 15,1 |
| 5 | VI | 6000 | 14 | 2 | 35 | 5,8 | 16,4 |
| 6 | VII | 200 | 17 | 2 | 17 | 4,7 | 16,6 |
| 7 | VIII | 667 | 16 | 3 | 0 | 6,0 | 18,1 |
| 8 | IX | 400 | 10 | 3 | 10 | 5,2 | 16,7 |
| 9 | X | 667 | 10 | 5 | 28 | 6,7 | 18,1 |
| 10 | XI | 533 | 10 | 3 | 9 | 6,8 | 16,8 |
| 11 | XII | 400 | 10 | 3 | 10 | 6,4 | 14,6 |
| 12 | XIII | 667 | 10 | 5 | 32 | 6,3 | 18,3 |
| 13 | XIV | 467 | 12 | 1 | 5 | 2,5 | 15,6 |
| 14 | XV | 2133 | 10 | 1 | 0 | 3,2 | 15,7 |

TABELLE 1 (Fortsetzung)

| Anwendungs-beispiel Nr. | Diaminderivat als Härter | Dampfdruck Diaminderivat (Pa /100 °C) | Gew.-Teile Diaminderivat auf 100 Gew.-Teile Epoxidharz | Tecam-Topfzeit (100 g / 23 °C) | | Zugscherfestigkeit (N /mm²) nach einer Härtungszeit von | |
|---|---|---|---|---|---|---|---|
| | | | | Std. | Min. | 2 Tagen (23 °C) | 20 Min. (100 °C) |
| 15 | XVI | 667 | 10 | 1 | 15 | 3,0 | 13,2 |
| 16 | XVII | 1333 | 10 | 1 | 19 | 2,5 | 13,5 |
| 17 | XVIII | 0,13 | 10 | 4 | 7 | 6,2 | 13,0 |
| 18 | XIX | 400 | 10 | – | 56 | 3,2 | 10,8 |
| Vgl. zu 19 u. 20 | XX | 267 | 11 | 1 | 34 | 1,6 | 17,4 |
| Vergleich zu 21 | XXI | 80 | 13 | 1 | 50 | 3,5 | 15,7 |
| Vergleich zu 22 | XXII | 400 | 12 | 3 | 41 | 0,5 | 23,0 |
| 19 | XXVI | 120 | 10 | 7 | 38 | 5,2 | 13,6 |
| 20 | XXVII | 13,3 | 10 | 5 | 10 | 3,1 | 17,4 |
| 21 | XXVIII | 120 | 10 | 2 | 50 | 4,0 | 14,7 |
| 22 | XXIX | 26,7 | 12 | 5 | 0 | 3,5 | 15,9 |

I. $(CH_3)_2N(CH_2)_3NH_2$

II. 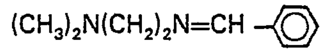

III. $(CH_3)_2N(CH_2)_3N{=}CHCH(CH_3)_2$

IV. 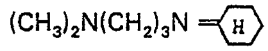

V. 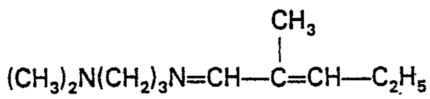

VI. $(CH_3)_2N(CH_2)_3NHCH_2CH(CH_3)_2$

VII. 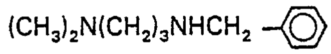

VIII. 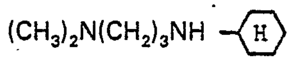

IX. $(CH_3)_2N(CH_2)_2NH(CH_2)_2CN$

X. $(CH_3)_2N(CH_2)_2NH(CH_2)_2CN$

XI. 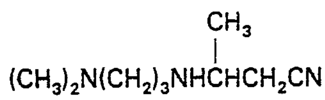

XII. 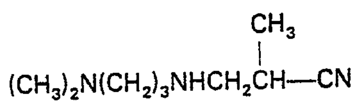

XIII. 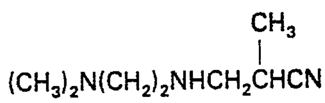

XIV. $(CH_3)_2N(CH_2)_3NH(CH_2)_3NH_2$

XV. $(CH_3)_2N(CH_2)_2NH(CH_2)_3NH_2$

XVI. 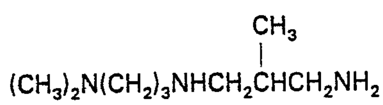

XVII. 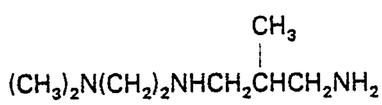

XVIII. $(CH_3)_2N(CH_2)_3N(CH_2CH_2CN)_2$

XIX. $(CH_3)_2N(CH_2)_3N(CH_2CH_2CH_2NH_2)_2$

XX. $(CH_3)_2N(CH_2)_3NHCHO$

XXI. $(CH_3)_2N(CH_2)_3NHCOCH_3$

XXII. $(CH_3)_2N(CH_2)_3NHCOC_2H_5$

XXVI. 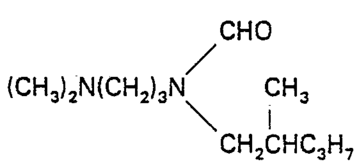

XXVII.

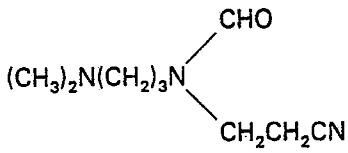

XXVIII.

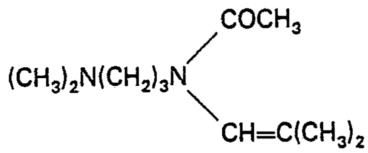

XXIX.

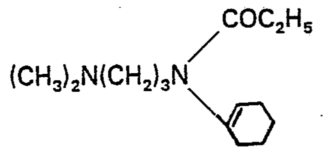

Die Mischungen besitzen gegenüber dem Vergleichsbeispiel zum Teil erheblich längere Topfzeiten; sie härten jedoch trotzdem unter den gleichen Härtungsbedingungen aus, was die Werte für die Zugscherfestigkeit beweisen. Die Dampfdrucke der reinen Amine liegen weit unter dem des Dimethylaminopropylamins.

*2) Untersuchungen an Amin/Epoxyd-Gemischen die Zusätze enthalten.*

Für die Bestimmung der Topfzeiten der Gemische und der Hafteigenschaften der gehärteten Produkte werden Mischungen aus 100 Teilen Harzkomponente und 40 Teilen Härter verwendet.

Die Harzkomponente besteht aus 75 Teilen flüssigem Epoxidharz auf Basis von Bisphenol A und Epichlorhydrin (Epoxydäquivalent 188) und 25 Teilen Litophonpulver. Die Härter werden hergestellt.

a) durch Vermischen eines Polyaminoamides Versamid 125, (Schering) mit den Diaminderivaten, oder

b) durch Vermischen eines Polyaminoamides Versamid 140, (Schering) mit den durch 30 Minuten langes Behandeln bei 100—120°C erhaltenen Addukten der Diaminderivate an HYCAR-CTBN (flüssiges Butadien/Acrylnitril-Copolymeres mit endständigen Carboxylgruppen; Hersteller Goodrich).

Die Art in den Beispiele 30—36 eingesetzten Amine und die Mengenverhältnisse der Gemische sind der Tabelle 2 zu entnehmen. Die Prüfergebnisse gibt Tabelle 3 wieder.

Alle Gemische der Tabellen 2 und 3 haben gegenüber dem Stand der Technik längere Topfzeiten und weisen nach der Härtung erhöhte Kurzzeitwärmefestigkeiten und wesentlich bessere Rollenschälfestigkeiten bei etwa gleichwertigen Zugscherfestigkeiten auf.

TABELLE 2

| Applikations-beispiel Nr. | Teile Amin | Teile Versamid Typ 125 | Teile Versamid Typ 140 | Teile Harz-komponente * | Teile HYCAR–CTBN |
|---|---|---|---|---|---|
| Vergleich 1 | 7 $(CH_3)_2N(CH_2)_3NH_2$ | 33 | – | 100 | – |
| 23 | 7 $(CH_3)_2N(CH_2)_3NH(CH_2)_3NH_2$ | 33 | – | 100 | – |
| 24 | 7 $(CH_3)_2N(CH_2)_3N(CH_2CH_2CH_2NH_2)_2$ | 33 | – | 100 | – |
| 25 | 9 $(CH_3)_2N(CH_2)_3NH-$ 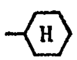 | 31 | – | 100 | – |
| 26 | 7 $(CH_3)_2N(CH_2)_3N=CHCH(CH_3)_2$ | 33 | – | 100 | – |
| Vergleich 2 | 8 $(CH_3)_2N(CH_2)_3NH_2$ | – | 20 | 100 | 12 |
| 27 | 8 $(CH_3)_2N(CH_2)_3NHCH_2CH_2CN$ | – | 20 | 100 | 12 |
| 28 | 8 $(CH_3)_2N(CH_2)_3NH(CH_2)_3NH_2$ | – | 20 | 100 | 12 |

*) Zusammensetzung:

75 Teile Epoxydharz (Basis Bisphenol A und Epichlorhydrin, Epoxydäquivalent 188) und 25 Teile Lithophonpulver.

Härtungsbedingungen: 20 Minuten bei 100°C.

TABELLE 3

| Applikations-beispeil Nr. | Zugscher-festigkeit; N/mm² | Rollenschäl-festigkeit; N/mm² | Kurzzeit-wärmefestig-keit; °C | Topfzeit bei 23 °C in Min. | |
|---|---|---|---|---|---|
| | | | | Menge 100 g | Menge 200 g |
| Vergleich 1 | 28 | 3,2 | 70 | 74 | 40 |
| 23 | 29 | 4,2 | 72 | 80 | – |
| 24 | 29 | 6,0 | – | – | 75 |
| 25 | 26 | 5,7 | – | – | 120 |
| 26 | 28 | 4,3 | – | – | 115 |
| Vergleich 2 | 30 | 6,0 | 80 | 80 | – |
| 27 | 30 | 6,4 | 78 | 260 | – |
| 28 | 31 | 6,1 | 82 | 95 | – |

0081616

**Patentansprüche**

1. Härtbare Gemische, enthaltend eine Polyepoxidverbindung mit durchschnittlich mehr als einer Epoxidgruppe im Molekül und einen Härter in einer Menge von 0,1 bis 30 Gewichtsteilen, bezogen auf 100 Gewichtsteile Polyepoxidverbindung, dadurch gekennzeichnet, dass der Härter der Formel I entspricht,

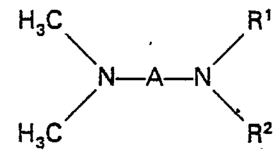

(I)

worin

A Aethylen, 1,3-Propylen oder in 1- oder 2-Stellung methyliertes 1,3-Propylen ist,

$R^1$ ein Wasserstoffatom und $R^2$ einen gesättigten, olefinisch ungesättigten oder arylierten Kohlenwasserstoffrest aliphatischen oder cycloaliphatischen Charakters sind, oder $R^2$ diesen Kohlenwasserstoffrest und $R^1$ Acyl bedeuten, oder

$R^1$ ein Wasserstoffatom oder unabhängig die Bedeutung von $R^2$ hat und $R^2$ $A^1$—CN oder $A^1$—$CH_2$—$NH_2$ bedeutet, worin $A^1$ Aethylen oder in 1-oder 2-Stellung methyliertes Aethylen ist, oder

$R^1$ und $R^2$ zusammen Alkyliden, Alkenyliden, Cycloalkyliden oder Cycloalkenyliden bedeutet.

2. Härtbare Gemische gemäss Anspruch 1, gekennzeichnet, dass in seiner Bedeutung als Kohlenwasserstoffrest Alkyl, Alkenyl, Cycloalkyl, Cycloalkenyl oder Aralkyl darstellen.

3. Härtbare Gemische gemäss Anspruch 1, dadurch gekennzeichnet, dass A Aethylen oder 1,3-Propylen, und $R^2$ als Kohlenwasserstoffrest Alkyl, Cycloalkyl oder Aralkyl ist oder $R^1$ und $R^2$ zusammen Alkyliden oder Cycloalkyliden bedeuten.

4. Härtbare Gemische gemäss Anspruch 1, dadurch gekennzeichnet, dass A in 1- oder 2-Stellung methyliertes 1,3-Propylen darstellt.

5. Härtbare Gemische gemäss Anspruch 1, dadurch gekennzeichnet, dass $R^1$ in Formel I ein Wasserstoffatom und $R^2$ Alkyl, Cycloalkyl oder Aralkyl sind.

6. Härtbare Gemische gemäss Anspruch 3, dadurch gekennzeichnet, dass das Alkyl oder Alkenyl 1 bis 12, vorzugsweise 1 bis 8 C-Atome, das Cycloalkyl oder Cycloalkenyl 5 bis 8 Ringkohlenstoffatome, das Aralkyl 7 bis 12 C-Atome, das Alkyliden oder Alkenyliden 2 bis 8 C-Atome, das Cycloalkyliden oder Cycloalkenyliden 5 bis 8 Ringkohlenstoffatome und das Acyl für $R^1$ 1 bis 18 C-Atome, vorzugsweise 1 bis 9 C-Atome enthält.

7. Härtbare Gemische gemäss Anspruch 1, dadurch gekennzeichnet, dass A in Formel I Aethylen oder insbesondere 1,3-Propylen ist.

8. Härtbare Gemische gemäss Anspruch 1, dadurch gekennzeichnet, dass $A^1$ in Formel I Aethylen bedeutet.

9. Härtbare Gemische gemäss Anspruch 1, dadurch gekennzeichnet, dass in Formel I $R^1$ H und $R^2$ Aethyl, n-Propyl, Isopropyl, n- oder Isobutyl, Cyclopentyl, Cyclohexyl, $\beta$-Cyanoäthyl oder $\gamma$-Aminopropyl sind.

10. Härtbare Gemische gemäss Anspruch 1, dadurch gekennzeichnet, dass in Formel I $R^1$ und $R^2$ entweder $\beta$-Cyanoäthyl oder $\gamma$-Aminopropyl sind.

11. Härtbare Gemische gemäss Anspruch 1, dadurch gekennzeichnet, dass in Formel I $R^1$ und $R^2$ zusammen i-Butyliden, Benzyliden oder Cyclohexyliden bedeuten.

12. Härtbare Gemische gemäss Anspruch 1, dadurch gekennzeichnet, dass A in Formel I Aethylen und insbesondere 1,3-Propylen, $R^1$ ein Wasserstoffatom und $R^2$ $\beta$-Cyanoäthyl, $\gamma$-Aminopropyl oder Acyl mit 1 bis 7 C-Atomen darstellen.

13. Härtbare Gemische gemäss Anspruch 1, dadurch gekennzeichnet, dass darin 0,5 bis 20 Teile des Härters der Formel I enthalten sind, bezogen auf 100 Teile Polyepoxidverbindung.

14. Härtbare Gemische gemäss Anspruch 1, dadurch gekennzeichnet, dass als Härter die Verbindungen $(CH_3)_2N(CH_2)_3NHCH_2CH_2CN$, $(CH_3)_2N(CH_2)_3NH(CH_2)_3NH_2$ oder $(CH_3)_2N(CH_2)_3N$ 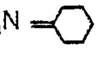 enthalten sind.

15. Verwendung von Verbindungen der Formel I gemäss Anspruch 1 zum Härten von Polyepoxidverbindungen mit durchschnittlich mehr als einer Epoxidgruppe im Molekül.

**Revendications**

1. Mélanges durcissables renfermant un composé polyépoxydique ayant en moyenne plus d'un groupe époxy dans sa molécule et un durcisseur en une quantité de 0,1 à 30 parties en poids pour 100 parties en poids du composé polyépoxydique, mélanges caractérisés en ce que le durcisseur qu'ils contiennent répond à la formule 1:

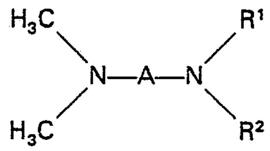

(I)

dans laquelle:

A représente un radical éthylène ou un radical propylène-1,3 éventuellement méthylé en position 1 ou en position 2,

$R^1$ représente un atome d'hydrogène et $R^2$ un radical hydrocarboné de caractère aliphatique ou cycloaliphatique, saturé, éthylénique ou arylé, ou $R^2$ représente un tel radical hydrocarboné et $R^1$ un radical acyle, ou

$R^1$ représente un atome d'hydrogène ou a, indépendamment, la signification de $R^2$ et $R^2$ représenté un radical $A^1$—CN ou un radical $A^1$—$CH_2NH_2$ dans lesquels $A^1$ désigne un radical éthylène éventuellement méthylé en 1 ou en 2, ou

$R^1$ et $R^2$ forment ensemble un radical alkylidène, alcénylidène, cycloalkylidène ou cycloalcénylidène.

2. Mélanges durcissables selon la revendication 1, caractérisés en ce que $R^1$ ou $R^2$, lorsqu'il désigne un radical hydrocarboné, est un radical alkyle, alcényle, cycloalkyle, cycloalcényle ou aralkyle.

3. Mélanges durcissables selon la revendication 1, caractérisés en ce que A représente un radical éthylène ou propylène-1,3 et $R^2$, en tant que radical hydrocarboné, représente un radical alkyle, cycloalkyle ou aralkyle, ou encore $R^1$ et $R^2$ forment ensemble un radical alkylidène ou cycloalkylidène.

4. Mélanges durcissables selon la revendication 1, caractérisés en ce que A représente un radical propylène-1,3 méthylé en position 1 ou en position 2.

5. Mélanges durcissables selon la revendication 1, caractérisés en ce que $R^1$, dans la formule I, désigne un atome d'hydrogène et $R^2$ un radical alkyle, cycloalkyle ou aralkyle.

6. Mélanges durcissables selon la revendication 3, caractérisés en ce que le radical alkyle ou acényle contient de 1 à 12 atomes de carbone, de préférence de 1 à 8, le radical cycloalkyle ou cycloalcényle contient de 5 à 8 atomes de carbone dans le cycle, le radical aralkyl contient de 7 à 12 atomes de carbone, le radical alkylidène ou alcénylidène contient de 2 à 8 atomes de carbone, le radical cycloalkylidène ou cycloalcénylidène contient de 5 à 8 atomes de carbone dans le cycle, et le radical acyle, pour $R^1$, contient de 1 à 18 atomes de carbone, de préférence de 1 à 9.

7. Mélanges durcissables selon la revendication 1, caractérisés en ce que A, dans la formule I, représente un radical éthylène ou, mieux, un radical propylène-1,3.

8. Mélanges durcissables selon la revendication 1, caractérisés en ce que $A^1$, dans la formule I, représente un radical éthylène.

9. Mélanges durcissables selon la revendication 1, caractérisés en ce que, dans la formule I, $R^1$ représente H et $R^2$ un radical éthyle, n-propyle, isopropyle, n- ou isobutyle, cyclopentyle, cyclohexyle, cyano-2 éthyle ou amino-3 propyle.

10. Mélanges durcissables selon la revendication 1, caractérisés en ce que, dans la formule I, $R^1$ et $R^2$ représentent soit un radical cyano-2 éthyle soit un radical amino-3 propyle.

11. Mélanges durcissables selon la revendication 1, caractérisés en ce que, dans la formule I, $R^1$ et $R^2$ forment ensemble un radical isobutylidène, benzylidène ou cyclohexylidène.

12. Mélanges durcissables selon la revendication 1, caractérisés en ce que A, dans la formule I, représente un radical éthylène ou, mieux, propylène-1,3, $R^1$ un atome d'hydrogène et $R^2$ un radical cyano-2 éthyle, amino-3 propyle ou acyle en C1—C7.

13. Mélanges durcissables selon la revendication 1, caractérisés en ce qu'ils contiennent de 0,5 à 20 parties du durcisseur de formule I pour 100 parties du composé polyépoxydique.

14. Mélanges durcissables selon la revendication 1, caractérisés en ce qu'ils contiennent, comme durcisseurs, l'un des composés $(CH_3)_2N(CH_2)_3NHCH_2CH_2CN$, $(CH_3)_2N(CH_2)_3NH(CH_2)_3NH_2$ et $(CH_3)_2N(CH_2)_3N$ 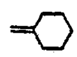

15. Utilisation de composés de formule I selon la revendication 1 pour le durcissement de composés polyépoxydiques ayant en moyenne plus d'un groupe époxy dans leur molécule.

## Claims

1. A curable mixture containing a polyepoxide compound, which contains, on average, more than one epoxide group in the molecule, and 0.1 to 30 parts by weight of a curing agent, based on 100 parts by weight of said polyepoxide compound, characterised in that the curing agent has the formula I

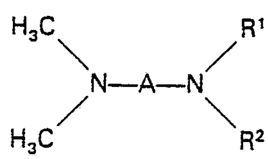

(I)

in which A is ethylene, 1,3-propylene or 1,3-propylene methylated in the 1- or 2-position, $R^1$ is a hydrogen atom and $R^2$ is a saturated, olefinically unsaturated or arylated hydrocarbon radical of aliphatic or cycloaliphatic character, or $R^2$ is the said hydrocarbon radical and $R^1$ is acyl, or $R^1$ is a hydrogen atom or independently has the meaning of $R^2$, and $R^2$ is $A^1$—CN or $A^1$—$CH_2$—$NH_2$, in which $A^1$ is ethylene or ethylene methylated in the 1- or 2-position, or $R^1$ and $R^2$ together are alkylidene, alkenylidene, cycloalkylidene or cycloalkenylidene.

2. A curable mixture according to claim 1, characterised in that a hydrocarbon radical $R^1$ or $R^2$ is alkyl, alkenyl, cycloalkyl, cycloalkenyl or aralkyl.

3. A curable mixture according to claim 1, characterised in that A is ethylene or 1,3-propylene and $R^2$ as a hydrocarbon radical is alkyl, cycloalkyl or aralkyl, or $R^1$ and $R^2$ together are alkylidene or cycloalkylidene.

4. A curable mixture according to claim 1, characterised in that A is 1,3-propylene methylated in the 1- or 2-position.

5. A curable mixture according to claim 1, characterised in that $R^1$ in formula I is a hydrogen atom and $R^2$ is alkyl, cycloalkyl or aralkyl.

6. A curable mixture according to claim 3, characterised in that alkyl or alkenyl contains 1 to 12 and preferably 1 to 8 carbon atoms, cycloalkyl or cycloalkenyl contains 5 to 8 ring carbon atoms, aralkyl contains 7 to 12 carbon atoms, alkylidene or alkenylidene contains 2 to 8 carbon atoms, cycloalkylidene or cycloalkenylidene contains 5 to 8 ring carbon atoms, and $R^1$ as acyl contains 1 to 18 carbon atoms, preferably 1 to 9 carbon atoms.

7. A curable mixture according to claim 1, characterised in that A in formula I is ethylene or, preferably, 1,3-propylene.

8. A curable mixture according to claim 1, characterised in that $A^1$ in formula I is ethylene.

9. A curable mixture according to claim 1, characterised in that, in formula I, $R^1$ is H and $R^2$ is ethyl, n-propyl, isopropyl, n- or iso-butyl, cyclopentyl, cyclohexyl, $\beta$-cyanoethyl or $\gamma$-aminopropyl.

10. A curable mixture according to claim 1, characterised in that, in formula I, $R^1$ and $R^2$ are either $\beta$-cyanoethyl or $\gamma$-aminopropyl.

11. A curable mixture according to claim 1, characterised in that, in formula I, $R^1$ and $R^2$ together are i-butylidene, benzylidene or cyclohexylidene.

12. A curable mixture according to claim 1, characterised in that A in formula I is ethylene and, preferably, 1,3-propylene, $R^1$ is a hydrogen atom and $R^2$ is $\beta$-cyanoethyl, $\gamma$-aminopropyl or acyl having 1 to 7 carbon atoms.

13. A curable mixture according to claim 1, characterised in that it contains 0.5 to 20 parts of the curing agent of the formula I, based on 100 parts of polyepoxide compound.

14. A curable mixture according to claim 1, characterised in that it contains, as curing agent, the compounds $(CH_3)_2N(CH_2)_3NHCH_2CH_2CN$, $(CH_3)_2N(CH_2)_3NH(CH_2)_3NH_2$ or $(CH_3)_2N(CH_2)_3N$ 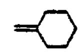

15. Use of a compound of the formula I according to claim 1 for curing polyepoxide compounds containing on average more than one epoxide group in the molecule.